# EUROPEAN PATENT SPECIFICATION

(11) **EP 4 445 743 B1**
(45) Date of publication and mention of the grant of the patent: **02.12.2026**
(21) Application number: 24186213.5
(22) Date of filing: 31.03.2017
(51) Int. Cl.: A23G 9/28, A23G 9/22, A23G 9/30

(54) **FROZEN DISPENSING MACHINE HEAT TREATMENT SYSTEM AND METHOD**
WÄRMEBEHANDLUNGSSYSTEM UND -VERFAHREN FÜR GEFRORENE AUSGABEMASCHINE
SYSTÈME ET PROCÉDÉ DE TRAITEMENT THERMIQUE DE MACHINE DE DISTRIBUTION CONGELÉE

(30) Priority: 07.04.2016 US 201662319422 P
(43) Date of publication of application: 16.10.2024
(62) Document number(s) of the earlier application(s) in accordance with Art. 76 EPC: 23170190.5 / 4 226 771; 17716761.6 / 3 439 484
(73) Proprietor: Taylor Commercial Foodservice, LLC, Rockton, IL 61072 (US)
(72) Inventor: WADLE, Stephen M., Rockton, 61072 (US); MINARD, James J., Rockton, 61072 (US)
(74) Representative: Finch, Steven Caffall

(56) References cited:
- EP-A1- 2 936 992
- WO-A1-2009/027757
- WO-A1-2014/188351
- US-A- 4 522 041
- US-A- 4 680 944

## Description

### BACKGROUND

The subject matter disclosed herein relates to frozen food product dispensing machines. More specifically, the present disclosure relates to heat treatment of frozen food product dispensing machines.

In a typical frozen food dispensing machine, such as a frozen dessert dispenser, product or product mix, typically in a liquid state is delivered to the machine. The bag is opened, and the product or mix is emptied from the bag into a storage hopper portion of the machine. The hopper stores the product and refrigerates it, without freezing the product. To dispense, the product is flowed from the hopper into a freezing cylinder where it is frozen, then to a dispensing portion where it is dispensed as frozen food. To ensure clean or sanitary conditions of the dispensing machine and the frozen food itself, the machine is either emptied, cleaned and sanitized or sanitized using a heat-treating cycle at a selected interval, usually once per day. Emptying the machine results in considerable waste of product, which is disposed from the machine. The possibility exists of potential contamination or spillage of product emptied into the hopper once the sanitizing steps are complete.

Two methodologies currently are utilized to ensure that the dispensed product is safe to consume. The first includes a periodic heat treatment of the entire machine, including product storage bins, transport lines, freezing cylinder and dispensing portion, including the product therein. This is a large volume of material and product to bring up to heat treatment temperature, which subsequently takes a considerable amount of time and energy. The other method involves periodically draining the entire machine and manually cleaning it. This is labor and time intensive, and also costly since the drained product is discarded.

WO2014/188351 A1 discloses a frozen food dispensing machine including a bag-inbox product storage container, a cooling and heating cylinder, and a pump that recirculates the product through the cooling and heating cylinder in a pasteurization cycle.

EP 2936992 A1 discloses periodic cleaning and recirculating pasteurization processes in a similar machine.

### SUMMARY

The present invention provides, in a first aspect, a frozen food dispensing machine, and in a second aspect, a method, as defined in the respective independent claims. The dependent claims define optional features.

In one embodiment, a method of performing a heat treatment cycle on a volume of product in a frozen food dispensing machine includes disconnecting a product storage portion of the machine from a freezing portion and a dispensing portion of the machine, defining a heat treatment circuit including the freezing portion and the dispensing portion of the machine, maintaining a first volume of product at the product storage portion at a product storage temperature and performing a heat treatment cycle on a second volume of product disposed in the heat treatment circuit at a heat treatment temperature greater than the product storage temperature.

Optionally, disconnecting the product storage portion of the machine includes disconnecting a probe from a fitment of the product storage portion.

Optionally, defining the heat treatment circuit includes connecting the probe to a recirculation line at a recirculation port, the recirculation line extending from the recirculation port to one of the freezing portion or the dispensing portion completing the heat treatment circuit.

Optionally, the heat treatment cycle includes raising a temperature of the second volume of product to at least the heat treatment temperature within a first time duration, holding the second volume of product at the heat treatment temperature for at least a second time duration, and cooling the second volume of product to an operational temperature within a third time duration.

Optionally, the first time duration is about ninety minutes.

Optionally, the second time duration is about 30 minutes.

Optionally, the heat treatment temperature is about 65.6 degrees Celsius (150 degrees Fahrenheit).

Optionally, the product storage portion of the machine is reconnected to the freezing portion and the dispensing portion of the machine upon completion of the heat treatment cycle.

In an embodiment, a frozen food dispensing machine includes a product storage portion including a first volume of product, a freezing portion operably connected to the product storage portion, a dispensing portion operably connected to the freezing portion to dispense a frozen food product, a recirculation line operably connectable to one or more of the freezing portion or the dispensing portion, and a product delivery line operably connected to the freezing portion. The product delivery line is selectably connectable to the product storage portion for dispensing operations of the frozen food dispensing machine or to the recirculation line to define a heat treatment circuit for periodic heat treatment of a second volume of product disposed at the heat treatment circuit. The heat treatment circuit includes the freezing portion and the dispensing portion and omits the product storage portion.

Optionally, the product storage portion includes a fitment for connection to the product delivery line.

Optionally, the product delivery line includes a probe for connecting to the product storage, the probe containing a one-way valve to prevent product flow from the product delivery line into the product storage portion.

Optionally, the first volume of product is contained in one or more bins, bottles or bags.

Optionally, the first volume of product is maintained at an operational temperature of the frozen food dispensing machine.

Optionally, the first volume of product is stored in a refrigerated cabinet.

Optionally, the heat treatment includes raising a temperature of the second volume of product to a heat treatment temperature within a first time duration, holding the second volume of product at the heat treatment temperature for at least a second time duration, and cooling the second volume of product to the operational temperature within a third time duration.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is schematic view of an embodiment of a frozen food dispensing machine configured for dispensing operation;
FIG. 2 is a schematic view of an embodiment of a frozen food dispensing machine configured for heat treatment operation;
FIG. 3 is another schematic view of an embodiment of a frozen food dispensing machine;
FIG. 4 is a perspective view of an embodiment of a freezing cylinder of a frozen food dispensing machine;
FIG. 5 is a schematic view of a conductive heater location in an embodiment of a frozen food dispensing machine;
FIG. 6 is a cross-sectional view of an embodiment of a freezing cylinder of a frozen food dispensing machine.

### DETAILED DESCRIPTION

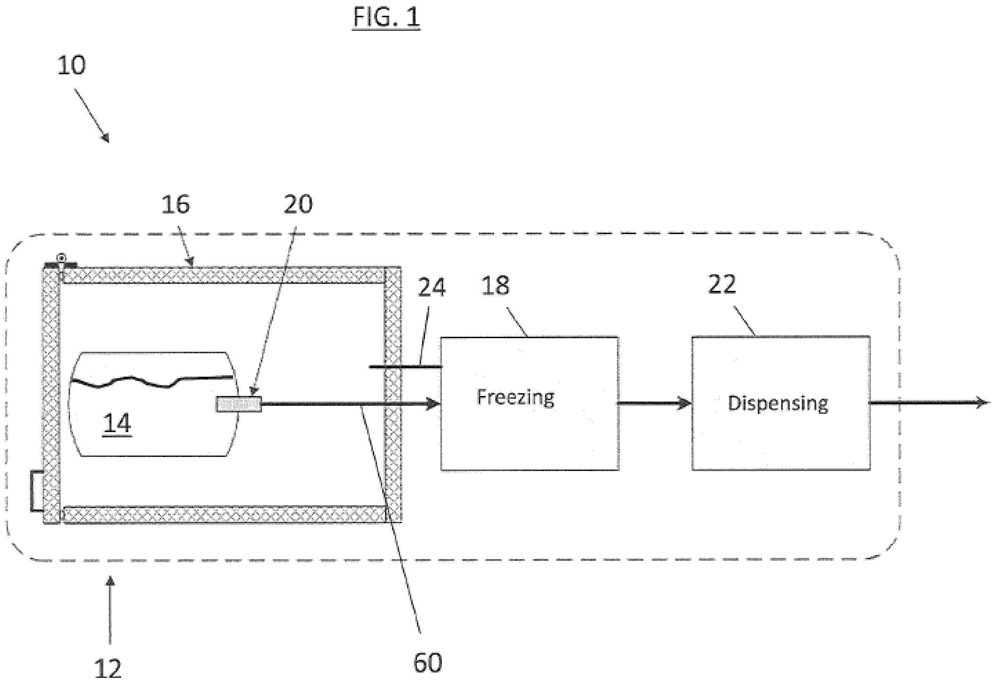

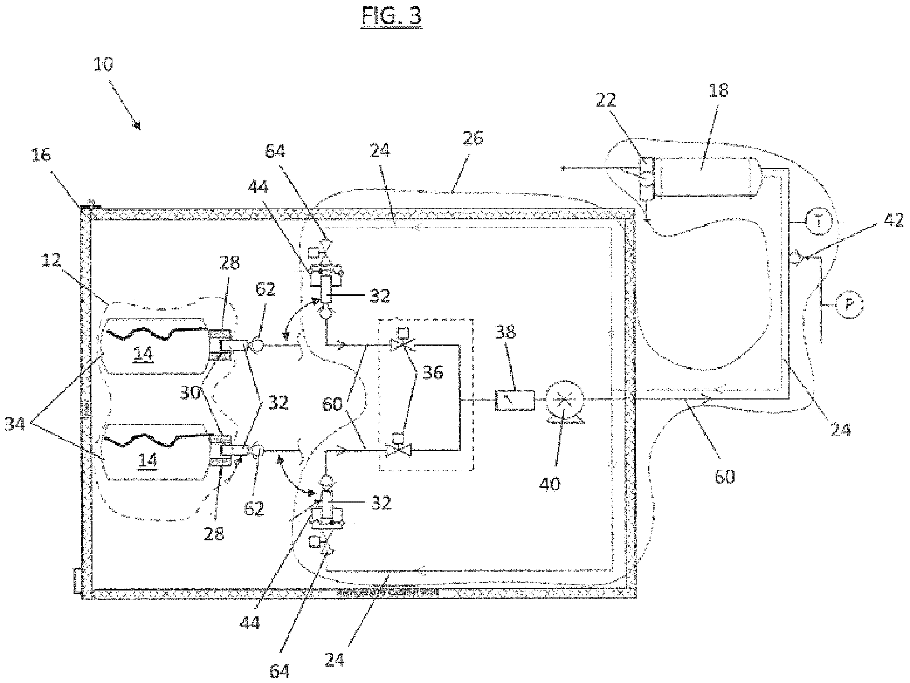

In FIG. 1 is shown a schematic of a frozen food dispensing machine (hereinafter "machine") 10 configured for dispensing operation. The machine 10 includes a product storage section 12, where a volume of liquid product 14 is stored for use by the machine 10. The product storage section 12 includes a storage compartment 16, which in some embodiments is refrigerated to about 5 degrees Celsius (41 degrees Fahrenheit) or other temperature, while in other embodiments the storage compartment 16 is maintained at about ambient temperature. The volume of product 14 is stored in a container, for example, a bag or a bin and is connected to a freezing cylinder 18 via a fitting 20. Shown best in FIG. 3, a product bag 34 is equipped with a fitment 28 that includes a self-closing seal 30 that prevents flow from the bag 34 unless the fitting 20 is connected to the product bag 34. Referring again to FIG. 1, the liquid product 14 is frozen at the freezing cylinder 18 and conveyed to a dispensing portion 22 for dispensing of frozen product into a container, such as a cup or a cone (not shown).

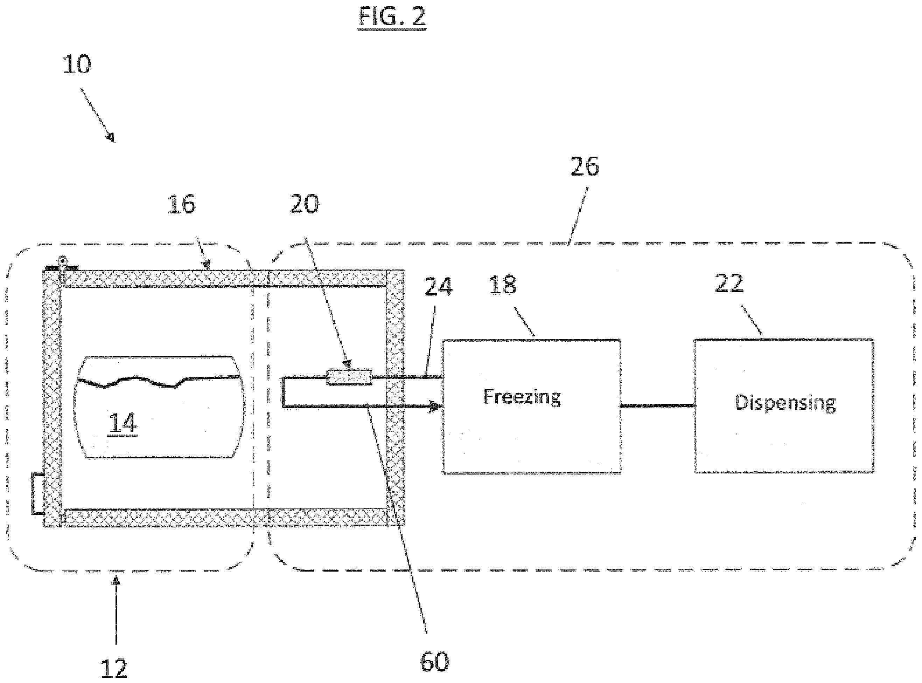

Referring now to FIG. 2, to ensure the product is safe for consumption, the machine 10 is periodically cycled through a heat treatment operation. The machine 10 utilizes a unique method to reduce the heat treated volume and thus reduce the time and energy utilized for a heat treatment cycle. Before initiating heat treatment, the fitting is disconnected from the product 14 and connected to a recirculation line 24. The product 14 is isolated from the remainder of the machine 10, and connecting the fitting 20 to the recirculation line 24 closes a heat treat circuit 26 with the freezing cylinder 18 and the dispensing portion 22. In some embodiments, the recirculation line 24 is connected to the freezing cylinder 18, while in other embodiments the recirculation line is connected to the dispensing portion 22. In addition, the recirculation line 24 may be permanently connected to the machine 10, or it may be a separate part connected to the machine 10, for heat treatment.

The product in the heat treat circuit 26 is then heated up to a heat treat temperature, in some embodiments about 65.6 degrees Celsius (150 degrees Fahrenheit), for a selected duration of time to accomplish the heat treatment. In some embodiments, the product is heated to the heat treatment temperature within 90 minutes or less, and will hold at the heat treat temperature for at least 30 minutes. After heat treatment is completed, the product in the heat treat circuit is then cooled to operating temperature and the fitting 20 is disconnected from the recirculation line 24 and reconnected to the product 14 for resumption of normal operation of the machine 10. Embodiments of this system and method will be described in more detail below. To heat the product in the heat treat circuit 26, a heater disposed at, for example, the freezing cylinder 18 (discussed below) is utilized.

Referring now to FIG. 3, another exemplary embodiment is shown. The machine 10 includes a storage compartment 16 that includes product 14 stored in two product bags 34. As stated above, the product 14 may alternatively be stored in a bin, bottle or other container. Further, while two product bags 34 are illustrated, other quantities may be utilized depending on capacity and use of the storage compartment 16. For example, other embodiments may include 1, 3, 4 or 6 or more product bags 34. In some embodiments, each product bag 34 has a capacity of about 10 liters, but one skilled in the art will readily appreciate that other sizes may be utilized. The probe 32 includes a one-way or check valve 62 that prevents inflow of material or contaminants into the product bag 14. The probe 32 is configured such that product 14 flow is in one direction only, out of product bag 34. The product bag 34 is equipped with fitment 28 that includes self-closing seal 30 that prevents flow from the product bag 34 unless the probe 32 is inserted into the product bag 34.

During normal dispensing operation of the machine 10, a probe 32 is connected to the fitment 28 to allow product 14 to flow from the product bag 34. The probe 32 is connected to, or is an end portion of, a product delivery line 60. The product 14 flows through the probe 32, along the product delivery line 60, and in some embodiments through a changeover valve 36, and then in some embodiments past a switch 38 to detect flow from two or more product bags 34. The product 14 is urged from the product bag 34 by a pump 40 located downstream of the switch 38. Downstream of the pump 40, the product 14 flow exits the storage compartment 16. While in the embodiment shown, the pump 40 is located inside the refrigerated compartment, in other embodiments the pump 40 may be located outside of the storage compartment 16.

From the pump 40, the product 14 flow continues along the product delivery line 60 toward the freezing cylinder 18. Before reaching the freezing cylinder 18, air is injected into the product 14 flow via an air injection valve 42. Once frozen at the freezing cylinder 18, the product 14 is dispensed at the dispenser 22. Air may be injected at any location into the product at any location between the probe 32 and the dispensing portion 22.

Periodically, in some embodiments once per day, the machine 10 undergoes the heat treat cycle. To configure the machine 10 for the heat treat cycle, the probes 32 are disconnected from the fitments 28. Each probe 32 and a corresponding recirculation port 44 of the recirculation line 24 may be sanitized, then each probe 32 is then installed to the corresponding recirculation port 44 of the recirculation line 24. Once the probes 32 are installed to the recirculation ports 44, the valve coupling 64 opens, one or more of the changeover valves 36 open, and the pump 40 is started to circulate product 14 through a heat treat circuit 26, defined from the pump 40 through the product delivery line 60, through the freezing cylinder 18, from the freezing cylinder 18 through the recirculation line 24 and through the recirculation port 44/probe 32 interface and back to the pump 40.

To perform the heat treat, the product 14 flowing through the heat treat circuit 26 is heated from the operational temperature of 5 degrees Celsius (41 degrees Fahrenheit) to the heat treat temperature of 65.6 degrees Celsius (150 degrees Fahrenheit) or higher, within 90 minutes or less, and will hold at the heat treat temperature for at least 30 minutes. Once the heating and hold portions of the heat treat cycle, the product flowing through the heat treat circuit 26 is cooled from the heat treat temperature back to the operational temperature in a time span of 120 minutes or less. In some embodiments, the cooling is aided by activating the freezing cylinder 18.

To return the machine 10 to normal operation once the product 14 is cooled, the pump 40 is stopped. The probes 32 are disconnected from the recirculation ports 44, the valve coupling 64 closes, and both the probes 32 and the fitments 28 are sanitized, and each probe 32 is then connected to a corresponding fitment 28.

Disconnecting the probes 32 from the fitments 28 prior to the heat treat operation isolates the product bags 34 from the heat treat circuit 26 thus greatly reducing a volume of product 14 that is heat treated, and as a consequence reducing the time and energy necessary for the heat and hold portions of the heat treat cycle. Because the product 14 is stored in the product bag 34 with the check valve 62 preventing flow from the probe 32 into the product bag 34, there is no need to heat treat the product 14 inside the product bag 34.

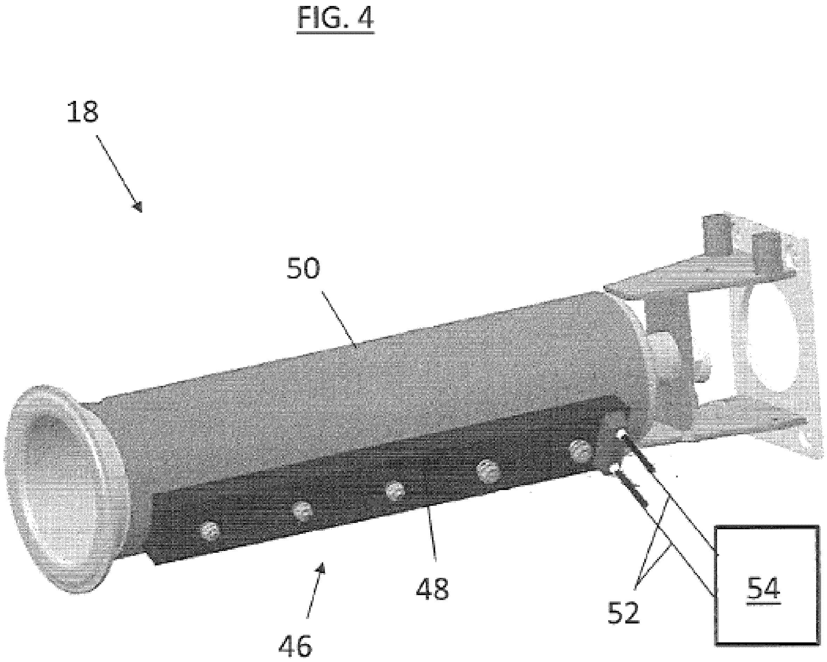

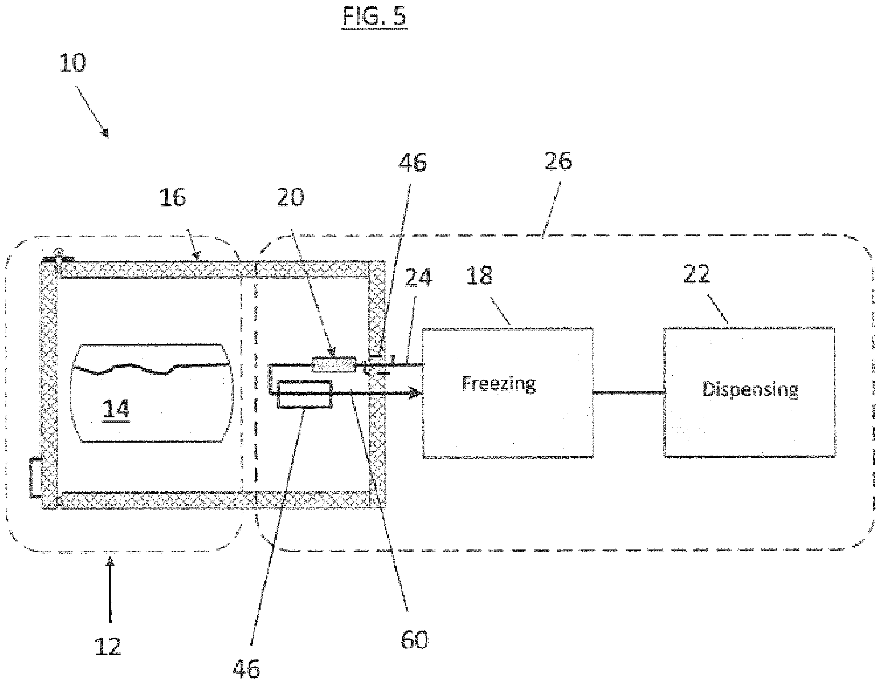

Referring now to FIG. 4, the product 14 flow in the heat treat circuit 26 is heated by a heater located at, for example, the freezing cylinder 18. In some examples, not claimed, the heater is a conductive heater 46 fixed to an outer wall of the freezing cylinder 18. The conductive heater 46 utilizes a heating element 48 in contact with a freezing cylinder vessel 50, to conductively heat the freezing cylinder vessel 50 and thus heat the product 14 flowing through the freezing cylinder 18. In some examples, not claimed, a thermal mastic or graphite gasket (not shown) is located between the heating element 48 and the freezing cylinder vessel 50. The heating element 48 is connected to electrical leads 52, and when a voltage is applied to the electrical leads 52 from a voltage source 54, the heating element 48 heats, thus heating the freezing cylinder vessel 50. In other examples, not claimed, such as shown in FIG. 5, the conductive heater 46 may be disposed at other locations of the machine 10, such as at the product delivery line 60, the recirculation line 24, or at an entrance or exit of the freezing cylinder 18.

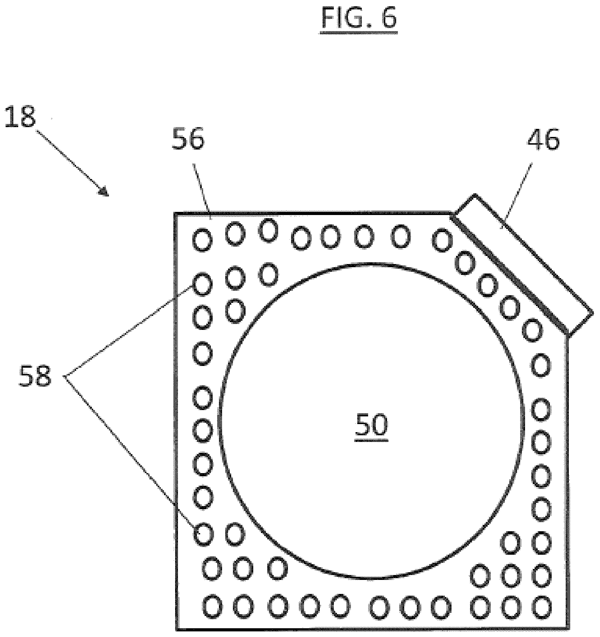

According to the invention, such as shown in FIG. 6, the conductive heater 46 is used in conjunction with a micro-channel heat exchanger (MCHX) 56 wrapped at least partially around the freezing cylinder vessel 50. The MCHX 56 includes a plurality of micro-channels 58 in which a heat transfer medium is located. When energized, the heating element 46 heats the MCHX 56, which in tum heats the freezing cylinder vessel 50. Utilizing the MCHX 56 in conjunction with the conductive heater 46 has the capability of distributing the heating effects of the conductive heater 46 over an increased circumferential area of the freezing cylinder vessel 50 to more quickly and more evenly heat the product 14 flowing through the freezing cylinder vessel 50 during the heat treatment cycle. In some embodiments, the conductive heater 46 heats the freezing cylinder vessel 50 to a freezing cylinder temperature greater than the heat treatment temperature prior to circulating the product through the heat treat circuit 26. In some embodiments, the freezing cylinder temperature is about 79 degrees Celsius (175 degrees Fahrenheit). This allows the product flowing therethrough to be quickly heated to the heat treatment temperature. While in some embodiments, the conductive heater 46 is located at a heat exchanger body of the MCHX 56, in other embodiments, the conductive heater 46 is located at one or more of a MCHX supply line or an MCHX return line.

While the present disclosure has been described in detail in connection with only a limited number of embodiments, it should be readily understood that the present disclosure is not limited to such disclosed embodiments but is only limited by the scope of the appended claims.

## Claims

1. A frozen food dispensing machine (10) comprising:
a first volume of product (14) stored in a product container (34) in a refrigerated storage compartment (16);
a freezing cylinder (18) including a freezing cylinder vessel (50);
a micro-channel heat exchanger (56) wrapped at least partially around the freezing cylinder vessel (50) to heat the freezing cylinder vessel (50),
the micro-channel heat exchanger (56) including a plurality of micro-channels (58) in which a heat transfer medium is located;
a conductive heater (46) having a heating element (48) arranged to heat the micro-channel heat exchanger (56);
a dispensing portion (22) operably connected to the freezing cylinder (18) to dispense a frozen food product;
a recirculation line (24) operably connectable to one or more of the freezing cylinder (18) or the dispensing portion (22);
a product delivery line (60) operably connected to the freezing cylinder (18); and
a pump (40) operable to urge a flow of the product (14) from the product container (34) along the product delivery line (60) toward the freezing cylinder (18);
the product delivery line (60) being connectable, selectively and alternatively:
to the product container (34) for dispensing operations of the frozen food dispensing machine (10), and
to the recirculation line (24) to define a heat treatment circuit (26) for periodic heat treatment of a second volume of product (14) circulated through the heat treatment circuit (26) by the pump (40) without heat treating the product (14) inside the product container (34);
the heat treatment circuit (26) including the freezing cylinder (18) and the dispensing portion (22) and omitting the product container (34).

2. A frozen food dispensing machine (10) according to claim 1, wherein the product container (34) is a bag.

3. A frozen food dispensing machine (10) according to claim 2, wherein:
the bag (34) includes a fitment (28); and
the recirculation line (24) includes a recirculation port (44); and
a probe (32) is connected to the product delivery line (60); and
the probe (32) is connectable, selectively and alternatively:
to the fitment (28), to allow the product (14) to flow from the bag (34) during a normal dispensing operation of the machine, and
to the recirculation port (44), for circulation of said second volume of the product (14) through the heat treatment circuit (26) during said periodic heat treatment;
the probe (32) including a check valve (62) to prevent inflow into the bag (14);
the fitment (28) including a self-closing seal (30) that prevents flow from the bag (34) unless the probe (32) is inserted into the bag (34).

4. A frozen food dispensing machine (10) according to claim 3, including two said bags (34), two said probes (32), and two said recirculation ports (44), and further including:
two changeover valves (36), each of the changeover valves (36) being arranged in the product delivery line (60) from a respective one of the probes (32), and
a switch (38) located in the product delivery line (60), downstream of the changeover valves (36) and upstream of the pump (40), for detecting a flow from the bags (34).

5. A frozen food dispensing machine (10) according to claim 1, wherein the conductive heater (46) is located at a heat exchanger body of the micro-channel heat exchanger (56).

6. A frozen food dispensing machine (10) according to claim 1, wherein the conductive heater (46) is located at a supply line or a return line of the micro-channel heat exchanger (56).

7. A frozen food dispensing machine (10) according to claim 1, wherein the refrigerated storage compartment (16) is a refrigerated cabinet.

8. A method including:
providing a frozen food dispensing machine (10) in accordance with claim 1;
disconnecting the product delivery line (60) from the product container (34);
reconnecting the product delivery line (60) to the recirculation line (24) to define the heat treatment circuit (26); and
circulating said second volume of product (14) through the heat treatment circuit (26), by the pump (40), without heat treating the product (14) inside the product container (34).

9. The method of claim 8, wherein the first volume of product (14) is maintained in the product container (34) at an operational temperature of the frozen food dispensing machine (10).

10. The method of claim 9, including:
raising a temperature of the second volume of product (14) to a heat treatment temperature within a first time duration;
holding the second volume of product (14) at the heat treatment temperature for at least a second time duration; and
cooling the second volume of product (14) to the operational temperature within a third time duration.

11. The method of claim 10, wherein the product (14) flowing through the heat treatment circuit (26) is heated from an operational temperature of 5°C (41 degrees Fahrenheit) to a heat treat temperature of 66°C (150 degrees Fahrenheit) or higher, within 90 minutes or less, and is held at the heat treat temperature for at least 30 minutes, and is cooled from the heat treat temperature back to the operational temperature in a time span of 120 minutes or less.

12. The method of claim 11, wherein the cooling is aided by activating the freezing cylinder (18).

## Patentansprüche

1. Ausgabemaschine für gefrorene Lebensmittel (10), umfassend:
ein erstes Produktvolumen (14), das in einem Produktbehälter (34) in einem gekühlten Lagerfach (16) gelagert ist;
einen Gefrierzylinder (18), der ein Gefrierzylindergefäß (50) umfasst;
einen Mikrokanal-Wärmetauscher (56), der zumindest teilweise um das Gefrierzylindergefäß (50) herum gewickelt ist, um das Gefrierzylindergefäß (50) zu erwärmen,
wobei der Mikrokanal-Wärmetauscher (56) eine Mehrzahl von Mikrokanälen (58) umfasst, in denen ein Wärmeübertragungsmedium angeordnet ist;
eine konduktive Heizvorrichtung (46) mit einem Heizelement (48), das angeordnet ist, um den Mikrokanal-Wärmetauscher (56) zu erwärmen;
einen Ausgabeabschnitt (22), der betriebsmäßig mit dem Gefrierzylinder (18) verbunden ist, um ein gefrorenes Lebensmittelprodukt auszugeben;
eine Rezirkulationsleitung (24), die betriebsmäßig mit einem oder mehreren von dem Gefrierzylinder (18) oder dem Ausgabeabschnitt (22) verbindbar ist;
eine Produktzufuhrleitung (60), die betriebsmäßig mit dem Gefrierzylinder (18) verbunden ist; und
eine Pumpe (40), die betätigbar ist, um eine Strömung des Produkts (14) von dem Produktbehälter (34) entlang der Produktzufuhrleitung (60) zu dem Gefrierzylinder (18) zu treiben;
wobei die Produktzufuhrleitung (60) wahlweise und alternativ verbindbar ist:
mit dem Produktbehälter (34) für Ausgabevorgänge der Ausgabemaschine für gefrorene Lebensmittel (10), und
mit der Rezirkulationsleitung (24), um einen Wärmebehandlungskreis (26) für eine periodische Wärmebehandlung eines zweiten Produktvolumens (14) zu definieren, das durch den Wärmebehandlungskreis (26) mittels der Pumpe (40) zirkuliert wird, ohne das Produkt (14) im Inneren des Produktbehälters (34) wärmezubehandeln;
wobei der Wärmebehandlungskreis (26) den Gefrierzylinder (18) und den Ausgabeabschnitt (22) umfasst und den Produktbehälter (34) auslässt.

2. Ausgabemaschine für gefrorene Lebensmittel (10) nach Anspruch 1, wobei der Produktbehälter (34) ein Beutel ist.

3. Ausgabemaschine für gefrorene Lebensmittel (10) nach Anspruch 2, wobei:
der Beutel (34) ein Anschlussstück (28) umfasst; und
die Rezirkulationsleitung (24) einen Rezirkulationsanschluss (44) umfasst; und
eine Sonde (32) mit der Produktzufuhrleitung (60) verbunden ist; und
die Sonde (32) wahlweise und alternativ verbindbar ist:
mit dem Anschlussstück (28), um es dem Produkt (14) zu ermöglichen, während eines normalen Ausgabevorgangs der Maschine aus dem Beutel (34) zu strömen, und
mit dem Rezirkulationsanschluss (44), zur Zirkulation des zweiten Produktvolumens (14) durch den Wärmebehandlungskreis (26) während der periodischen Wärmebehandlung;
wobei die Sonde (32) ein Rückschlagventil (62) umfasst, um einen Einstrom in den Beutel (14) zu verhindern;
wobei das Anschlussstück (28) eine selbstschließende Dichtung (30) umfasst, die einen Fluss aus dem Beutel (34) verhindert, sofern nicht die Sonde (32) in den Beutel (34) eingeführt ist.

4. Ausgabemaschine für gefrorene Lebensmittel (10) nach Anspruch 3, umfassend zwei der Beutel (34), zwei der Sonden (32) und zwei der Rezirkulationsanschlüsse (44), und ferner umfassend:
zwei Umschaltventile (36), wobei jedes der Umschaltventile (36) in der Produktzufuhrleitung (60) von einer jeweiligen der Sonden (32) angeordnet ist, und
einen Schalter (38), der in der Produktzufuhrleitung (60) stromabwärts der Umschaltventile (36) und stromaufwärts der Pumpe (40) angeordnet ist, um eine Strömung aus den Beuteln (34) zu erfassen.

5. Ausgabemaschine für gefrorene Lebensmittel (10) nach Anspruch 1, wobei die konduktive Heizvorrichtung (46) an einem Wärmetauscherkörper des Mikrokanal-Wärmetauschers (56) angeordnet ist.

6. Ausgabemaschine für gefrorene Lebensmittel (10) nach Anspruch 1, wobei die konduktive Heizvorrichtung (46) an einer Zufuhrleitung oder einer Rücklaufleitung des Mikrokanal-Wärmetauschers (56) angeordnet ist.

7. Ausgabemaschine für gefrorene Lebensmittel (10) nach Anspruch 1, wobei das gekühlte Lagerfach (16) ein Kühlschrank ist.

8. Verfahren, umfassend:
Bereitstellen einer Ausgabemaschine für gefrorene Lebensmittel (10) gemäß Anspruch 1;
Trennen der Produktzufuhrleitung (60) von dem Produktbehälter (34);
Wiederverbinden der Produktzufuhrleitung (60) mit der Rezirkulationsleitung (24), um den Wärmebehandlungskreis (26) zu definieren; und
Zirkulieren des zweiten Produktvolumens (14) durch den Wärmebehandlungskreis (26), mittels der Pumpe (40), ohne das Produkt (14) im Inneren des Produktbehälters (34) wärmezubehandeln.

9. Verfahren nach Anspruch 8, wobei das erste Produktvolumen (14) in dem Produktbehälter (34) auf einer Betriebstemperatur der Ausgabemaschine für gefrorene Lebensmittel (10) gehalten wird.

10. Verfahren nach Anspruch 9, umfassend:
Erhöhen einer Temperatur des zweiten Produktvolumens (14) auf eine Wärmebehandlungstemperatur innerhalb einer ersten Zeitdauer;
Halten des zweiten Produktvolumens (14) auf der Wärmebehandlungstemperatur für mindestens eine zweite Zeitdauer; und
Abkühlen des zweiten Produktvolumens (14) auf die Betriebstemperatur innerhalb einer dritten Zeitdauer.

11. Verfahren nach Anspruch 10, wobei das durch den Wärmebehandlungskreis (26) strömende Produkt (14) von einer Betriebstemperatur von 5 °C (41 Grad Fahrenheit) auf eine Wärmebehandlungstemperatur von 66 °C (150 Grad Fahrenheit) oder höher innerhalb von 90 Minuten oder weniger erwärmt wird, und für mindestens 30 Minuten auf der Wärmebehandlungstemperatur gehalten wird, und von der Wärmebehandlungstemperatur zurück auf die Betriebstemperatur in einer Zeitspanne von 120 Minuten oder weniger abgekühlt wird.

12. Verfahren nach Anspruch 11, wobei das Abkühlen durch Aktivieren des Gefrierzylinders (18) unterstützt wird.

## Revendications

1. Machine de distribution d'aliments congelés (10) comprenant :
un premier volume de produit (14) stocké dans un récipient de produit (34) dans un compartiment de stockage réfrigéré (16) ;
un cylindre de congélation (18) comprenant une cuve de cylindre de congélation (50) ;
un échangeur de chaleur à micro-canaux (56) enroulé au moins partiellement autour de la cuve de cylindre de congélation (50) pour chauffer la cuve de cylindre de congélation (50),
l'échangeur de chaleur à micro-canaux (56) comprenant une pluralité de micro-canaux (58) dans lesquels un milieu de transfert de chaleur est situé ;
un dispositif de chauffage par conduction (46) comportant un élément chauffant (48) agencé pour chauffer l'échangeur de chaleur à micro-canaux (56) ;
une partie de distribution (22) raccordée de manière fonctionnelle au cylindre de congélation (18) pour distribuer un produit alimentaire congelé ;
une conduite de recirculation (24) pouvant être raccordée de manière fonctionnelle à un ou plusieurs parmi le cylindre de congélation (18) ou la partie de distribution (22) ;
une conduite d'amenée de produit (60) raccordée de manière fonctionnelle au cylindre de congélation (18) ; et
une pompe (40) pouvant être actionnée pour pousser un écoulement du produit (14) depuis le récipient de produit (34) le long de la conduite d'amenée de produit (60) vers le cylindre de congélation (18) ;
la conduite d'amenée de produit (60) pouvant être raccordée, de manière sélective et alternative :
au récipient de produit (34) pour des opérations de distribution de la machine de distribution d'aliments congelés (10), et
à la conduite de recirculation (24) pour définir un circuit de traitement thermique (26) pour un traitement thermique périodique d'un deuxième volume de produit (14) mis en circulation à travers le circuit de traitement thermique (26) par la pompe (40) sans traitement thermique du produit (14) à l'intérieur du récipient de produit (34) ;
le circuit de traitement thermique (26) comprenant le cylindre de congélation (18) et la partie de distribution (22) et omettant le récipient de produit (34).

2. Machine de distribution d'aliments congelés (10) selon la revendication 1, dans laquelle le récipient de produit (34) est une poche.

3. Machine de distribution d'aliments congelés (10) selon la revendication 2, dans laquelle :
la poche (34) comprend un embout (28) ; et
la conduite de recirculation (24) comprend un orifice de recirculation (44) ; et
une sonde (32) est raccordée à la conduite d'amenée de produit (60) ; et
la sonde (32) peut être raccordée, de manière sélective et alternative :
à l'embout (28), pour permettre au produit (14) de s'écouler depuis la poche (34) pendant une opération de distribution normale de la machine, et
à l'orifice de recirculation (44), pour la circulation dudit deuxième volume de produit (14) à travers le circuit de traitement thermique (26) pendant ledit traitement thermique périodique ;
la sonde (32) comprenant un clapet anti-retour (62) pour empêcher un afflux dans la poche (14) ;
l'embout (28) comprenant un joint auto-obturant (30) qui empêche l'écoulement hors de la poche (34) à moins que la sonde (32) ne soit insérée dans la poche (34).

4. Machine de distribution d'aliments congelés (10) selon la revendication 3, comprenant deux dites poches (34), deux dites sondes (32) et deux dits orifices de recirculation (44), et comprenant en outre :
deux vannes de commutation (36), chacune des vannes de commutation (36) étant disposée dans la conduite d'amenée de produit (60) depuis une sonde respective parmi les sondes (32), et
un commutateur (38) situé dans la conduite d'amenée de produit (60), en aval des vannes de commutation (36) et en amont de la pompe (40), pour détecter un écoulement depuis les poches (34).

5. Machine de distribution d'aliments congelés (10) selon la revendication 1, dans laquelle le dispositif de chauffage par conduction (46) est situé au niveau d'un corps d'échangeur de chaleur de l'échangeur de chaleur à micro-canaux (56).

6. Machine de distribution d'aliments congelés (10) selon la revendication 1, dans laquelle le dispositif de chauffage par conduction (46) est situé au niveau d'une conduite d'alimentation ou d'une conduite de retour de l'échangeur de chaleur à micro-canaux (56).

7. Machine de distribution d'aliments congelés (10) selon la revendication 1, dans laquelle le compartiment de stockage réfrigéré (16) est une armoire réfrigérée.

8. Procédé comprenant :
fournir une machine de distribution d'aliments congelés (10) selon la revendication 1 ;
déconnecter la conduite d'amenée de produit (60) du récipient de produit (34) ;
reconnecter la conduite d'amenée de produit (60) à la conduite de recirculation (24) pour définir le circuit de traitement thermique (26) ; et
faire circuler ledit deuxième volume de produit (14) à travers le circuit de traitement thermique (26), au moyen de la pompe (40), sans traitement thermique du produit (14) à l'intérieur du récipient de produit (34).

9. Procédé selon la revendication 8, dans lequel le premier volume de produit (14) est maintenu dans le récipient de produit (34) à une température de fonctionnement de la machine de distribution d'aliments congelés (10).

10. Procédé selon la revendication 9, comprenant :
élever une température du deuxième volume de produit (14) jusqu'à une température de traitement thermique dans une première durée ;
maintenir le deuxième volume de produit (14) à la température de traitement thermique pendant au moins une deuxième durée ; et
refroidir le deuxième volume de produit (14) jusqu'à la température de fonctionnement dans une troisième durée.

11. Procédé selon la revendication 10, dans lequel le produit (14) s'écoulant à travers le circuit de traitement thermique (26) est chauffé depuis une température de fonctionnement de 5 °C (41 degrés Fahrenheit) jusqu'à une température de traitement thermique de 66 °C (150 degrés Fahrenheit) ou plus, en 90 minutes ou moins, et est maintenu à la température de traitement thermique pendant au moins 30 minutes, et est refroidi depuis la température de traitement thermique jusqu'à la température de fonctionnement dans un laps de temps de 120 minutes ou moins.

12. Procédé selon la revendication 11, dans lequel le refroidissement est assisté par l'activation du cylindre de congélation (18).
